## Europäisches Patentamt
## European Patent Office
## Office européen des brevets

(19)

(11) Veröffentlichungsnummer: **0 004 553**
**B1**

(12) **EUROPÄISCHE PATENTSCHRIFT**

(45) Veröffentlichungstag der Patentschrift: **26.08.81**

(21) Anmeldenummer: **79100605.9**

(22) Anmeldetag: **01.03.79**

(51) Int. Cl.³: **C 21 D 9/54**

(54) Vorrichtung zur Glühbehandlung von Bunden aus Metallbändern.

(30) Priorität: **01.03.78 AT 1462/78**

(43) Veröffentlichungstag der Anmeldung:
**17.10.79 Patentblatt 79/21**

(45) Bekanntmachung des Hinweises auf die Patenterteilung:
**26.08.81 Patentblatt 81/34**

(84) Benannte Vertragsstaaten:
**BE DE FR GB IT LU NL SE**

(56) Entgegenhaltungen:
**GB - A - 400 238**
**GB - A - 1 056 502**
**US - A - 2 137 868**
**US - A - 2 245 647**
**US - A - 2 591 097**
**US - A - 2 479 814**

(73) Patentinhaber: **VOEST-ALPINE Aktiengesellschaft**
**Friedrichstrasse 4**
**A-1011 Wien (AT)**

(72) Erfinder: **Kowarsch, Walter**
**Fressnitz 81**
**A-8670 Krieglach (AT)**

(74) Vertreter: **Kretschmer, Adolf, Dipl-Ing.**
**Schottengasse 3a**
**A-1014 Wien (AT)**

Courier Press, Leamington Spa, England.

## Vorrichtung zur Glühbehandlung von Bunden aus Metallbändern

Die Erfindung bezieht sich auf eine Vorrichtung zum Glühbehandeln von kaltgewalzten Bändern aus Metall, insbesondere Stahl, in Form von Bunden, in welchen die Bandlagen unmittelbar aneinander anliegen, in welcher die Bunde in einer Aufwärmphase erwärmt und nach einer Temperaturhaltephase in einer Kühlphase abgekühlt werden, mit einer den oder die Bund(e) umschließenden Schutzhaube, bei welcher an den durch die Schutzhaube begrenzten Außenraum die Saugseite, und an den von dem oder Bund(en) umschlossenen Innenraum die Druckseite eines Kühlgebläses angeschlossen ist, mit welchem ein Gaskühler in Serie geschaltet ist. Insbesondere bei der Glühbehandlung von Bändern aus niedrig gekohlten Stählen stellt das Kleben (Kaltschweißen) der Bandumgänge untereinander beim Glühen in normalen Haubenöfen ein besonderes Problem dar. Dieser Nachteil des Haubenglühofens tritt insbesondere bei höheren Glühtemperaturen, wie sie bei aluminiumberuhigtem Material notwendig sind, auf. Bis zu einer Glühtemperatur von etwa 650° kann das Kleben der Bandumgänge untereinander durch Umwickeln mit geringem Bandzug vor dem Einsatz in den Ofen weitestgehend vermieden werden. Besonders nachteilig wirkt sich das Kleben bei dünnen Bändern mit hochwertiger Oberfläche aus, da die Kleber beim Aufreißen am Abhaspel des Egalisiergerüstes an der Bandoberfläche Spuren hinterlassen, was zum Ausschuß des Bandes führt. Kleber, welche sich nicht mehr aufreißen lassen, führen zu Löchern im Band. Begünstigt wird das Kleben außerdem durch ein ungleichmäßiges Bandprofil. Wenn man diesem Mangel durch noch geringere Bandzüge beim Umwickeln begegnen will, erheben sich nach dem Glühen beim Abwickeln am Egalisiergerüst Schwierigkeiten, welche darin bestehen, daß durch den notwendigen Bandzug beim Abwickeln sich die Bandrolle zusammenzieht und Oberflächenbeschädigungen am Band durch Verreiben entstehen. Um diesem Mangel abzuhelfen, wurde die bekannte Open-Coil-Glühmethode entwickelt, welche jedoch umfangreiche maschinelle Anlagen vor der Glühe, weiters platzraubende Glühanlagen und komplizierte Abwickeleinrichtungen beim Egalisiergerüst erfordert. Die Kosten solcher Anlagen sind daher sehr hoch und insbesondere für billige Materialqualitäten unrentabel.

Vorrichtungen der eingangs genannten Art sind beispielsweise der US-A 2 479 814, sowie der US-A 2 591 097 zu entnehmen. Beiden bekannten Konstruktionen ist gemeinsam, daß Kühlmedium in den von den Bunden umschlossenen Innenraum eingeleitet wird. Mit dieser Maßnahme läßt sich zwar die oben beschriebene Ausbildung von Klebern beim Abkühlvorgang verhindern, jedoch besteht bei den bekannten Einrichtungen immer noch die Gefahr, daß derartige Kleber in der Aufwärmphase eintreten.

Die Erfindung zielt nun darauf ab, eine Vorrichtung der eingangs genannten Art zu schaffen, mit welcher sowohl in der Aufwärmphase als auch in der Abkühlphase ein Temperaturgradient über den Radius der Bunde aufrecht erhalten werden kann, bei welchem radial weiter außen liegende Bereiche auf höheren Temperaturen als radial weiter innen liegende Teile gehalten werden. Auch in einer zwischen dem Aufwärmen und dem Abkühlen vorgesehenen Temperaturhaltephase soll eine Umkehrung dieses Temperaturgradienten verhindert werden. Die erfindungsgemäße Vorrichtung zur Lösung dieser Aufgabe ist im wesentlichen dadurch gekennzeichnet, daß der durch die Schutzhaube begrenzte Außenraum gegenüber dem von dem oder den Bund(en) umschlossenen Innenraum durch das Gehäuse eines von einem Zentrifugalgebläse gebildeten Umwälzgebläses abgeschlossen ist, welches gleichachsig mit dem oder den Bund(en) angeordnet ist, und dessen Laufrad während der Kühlphase stillsetzbar ist, wobei über den Schaufelraum des Laufrades des Umwälzgebläses die Druckseite des Kühlgebläses mit dem von dem oder den Bunden umschlossenen Innenraum in Verbindung setzbar ist. Dadurch, daß der durch die Schutzhaube begrenzte Außenraum gegenüber dem von den Bunden umschlossenen Innenraum durch das Gehäuse eines von einem Zentrifugalgebläse gebildeten Umwälzgebläses abgeschlossen ist, strömt das in den Außenraum eingeführte Heizmedium in der Aufwärmphase zunächst in diesem Außenraum, wobei ein unmittelbarer Eintritt des Heizmediums in den Innenraum durch das Gehäuse des Gebläses erschwert wird. Das Heizmedium erwärmt hiebei die Außenlagen des Bundes zunächst stärker als die Innenlagen, wobei sich die Außenlagen stärker ausdehnen als die Innenlagen und keine Pressung der Innenlagen verursachen. Während der Haltezeit erfolgt nun eine Homogenisierung der Temperatur über den Radius der Bunde, wobei immer noch keine nennenswerten Pressungen auftreten. Diese Homogenisierung kann durch das Umwälzgebläse beschleunigt werden. Mittels dieses Umwälzgebläses werden während der Temperaturhaltephase die Gase von dem von den Bunden umschlossenen Innenraum über den Raum zwischen den Bunden und der Schutzhaube umgewälzt, so daß auch in der Temperaturhaltephase die Außenlagen etwas wärmer gehalten werden als die Innenlagen, so lange noch kein vollständiger Ausgleich erzielt ist. Dadurch, daß bei Stillsetzung des Laufrades des Umwälzgebläses die Druckseite des Kühlgebläses mit dem von dem oder den Bund(en) umschlossenen Innenraum in Verbindung setzbar ist, erfolgt bei der Kühlung bevorzugt eine Abkühlung der Innenlagen. Hiebei werden in der Kühlphase die Innenlagen der Bunde stärker gekühlt als die Außenlagen und es ziehen sich diese Innenlagen zusammen, während die Außenlagen noch stärker gedehnt sind. Es wird somit auch in der Kühlphase eine Pressung zwischen den Lagen, welche zu Klebern Anlaß geben könnte, mit Sicherheit vermieden. Als Heiz- bzw. Kühlmedium kommen hiefür in erster Linie Gase, insbesondere neutrale Schutzgase oder reduzierende Gase, in Frage, um Schädigungen der blanken Metalloberfläche zu vermeiden.

Die gekühlten Gase werden hiebei axial durch den Schaufelraum des Gebläses hindurch dem von den Bunden umschlossenen Innenraum zugeführt, von welchem sie dann in den Raum zwischen den Bunden und der Schutzhaube strömen. Hiebei kann gemäß einer bevorzugten Ausführungsform der Erfindung die Vorrichtung so ausgebildet sein, daß das Laufrad des Umwälzgebläses zwischen den Schaufeln axiale Durchtrittsöffnungen aufweist, welche durch Kappen abschließbar sind, welche am Laufrad im Bereich des der Achse näher liegenden Randes der Durchtrittsöffnungen von einer abwärts gerichteten Offenstellung in eine ungefähr horizontale Schließstellung schwenkbar gelagert sind und bei stillstehendem Laufrad unter der Wirkung der Schwerkraft die Durchtrittsöffnungen freigeben und bei rotierendem Laufrad unter der Wirkung der Fliehkraft diese Durchtrittsöffnungen abschließen. Es wird somit während der Kühlphase, wenn das Gebläse stillgesetzt ist, automatisch der von den Bunden umschlossene Innenraum mit dem Kühlgebläse verbunden, so daß die Kühlung bevorzugt auf die Innenlagen der Bunde wirkt.

Um hiebei eine gerichtete Strömung der Kühlgase von dem durch die Bunde umschlossenen Innenraum zu dem von der Schutzhaube umschlossenen Außenraum zu ermöglichen, können gemäß der Erfindung die Austrittsöffnungen der Förderkanäle des Laufrades durch Klappen abschließbar sein, welche im Bereich des oberen Randes der Austrittsöffnungen am Laufrad von einer nach abwärts gerichteten Schließstellung in eine ungefähr horizontal gerichtete Offenstellung schwenkbar gelagert sind und bei stillstehendem Laufrad unter der Wirkung der Schwerkraft die Austrittsöffnungen abschließen und bei rotierendem Laufrad unter der Wirkung der Fliehkraft diese Austrittsöffnungen freigeben. Wenn diese Klappen genügend schwer ausgebildet sind, so ist die Schließlage dieser Klappen durch das Gewicht derselben gesichert, jedoch ist eine schwere Ausbildung der am rotierenden Laufrad angelenkten Klappen wegen der Massenkräfte ungünstig. Auch eine Sicherung der Schließlage durch Federn bereitet Schwierigkeiten, da Federn im allgemeinen den hohen auftretenden Temperaturen nicht standhalten. Die Klappen könnten zusätzlich noch durch Federn in ihrer Schließlage gehalten werden, jedoch werden die Federn von üblicher Qualität den hohen auftretenden Temperaturen nicht standhalten. Eine Ausbildung, bei der die Klappen lediglich durch die Schwerkraft in ihrer Schließstellung gehalten werden, genügt aber dann, wenn der Druck der zugeführten Kühlgase nicht zu hoch ist. Gemäß einer bevorzugten Ausführungsform der Erfindung ist aber das Laufrad des Umwälzgebläses von ortsfest gelargerten schwenkbaren Klappen umgeben, welche von außen betätigbar sind und in ihrer geschlossenen Stellung den durch die Schutzhaube begrenzten Außenraum von dem durch den oder die Bunde umschlossenen Innenraum abschließen und in ihrer geöffneten Stellung diese Räume verbinden. Solche zwangsweise gesteuerten Klappen sind dann vorteilhaft, wenn das Kühlgas unter höheren Druck zugeführt wird. Hiebei können gemäß der Erfindung die Klappen von nach Art eines Leitapparates um achsparallel zum Gebläse angeordneten Achsen schwenkbar gelagerten Schaufeln gebildet sein, welche zu einer gemeinsam Verschwenkbewegung gekuppelt sind und in der geschlossenen Stellung aneinander anliegen. Eine solche Ausbildung der Klappen als Schaufeln eines Leitapparates hat auch den Vorteil, daß eine hohe Turbulenz der Schutzgase in der Aufheizperiode, in welcher diese Schutzgase durch die geöffneten Leitschaufeln strömen, erzielt wird.

Das Gehäuse des Umwälzgebläses kann hiebei in einfacher Weise vom Boden des den oder die Bunde aufnehmenden Raumes und von einer einen Teil der Konsole für die Auflagerung der Bunde bildenden Platte gebildet sein.

Üblicherweise ist der unterste Bandbund auf eine ringförmige Konvektorplatte aufgelegt und die Bunde sind unter Zwischenschaltung von ringförmigen Konvektorplatten aufeinandergeschichtet. Solche Konvektorplatten weisen radiale Rippen auf und ermöglichen den Durchtritt des Schutzgases, so daß die Erhitzung und auch die Kühlung der Bandlagen von den Bandkanten aus erfolgt. Gemäß der Erfindung ist nun vorzugsweise die oberste Konvektorplatte als die Bunde und den von den Bunden umschlossenen Innenraum derselben abdeckende volle Platte ausgebildet. Dies hat den Vorteil, daß in der Kühlphase eine Zwangsströmung der Konvektorplatten verbessert platten erzielt wird und das Kühlgas nicht einfach über den obersten Bund hinaus zu dem von der Schutzhaube umschlossenen Außenraum gelangen kann. In der Kühlphase bewirkt die den Bundstapel oben abdeckende Platte eine Druckerhöhung in dem von den Bunden umschlossenen Innenraum, so daß die Durchströmung der Konvektorplatten verbessert wird.

Gemäß der Erfindung kann auch eine die Schutzhaube umgebende abnehmbare Wärmeisolierhaube vorgesehen sein. Diese Isolierhaube kann beispielsweise während der Kühlphase aufgesetzt sein, so daß auch während der Kühlphase das Wärmegefälle in den Bunden von außen nach innen entsprechend hoch gehalten wird. Wenn die Umwälzung der Kühlgase zur Aufrechterhaltung eines ausrechenden Wärmegefälles genügt, so kann auch während der Kühlphase die Isolierhaube entfallen oder abgenommen werden, um eine schnellere Kühlung zu ermöglichen.

In der Zeichnung ist die Erfindung anhand von Ausührungsbeispielen schematisch erläutert.

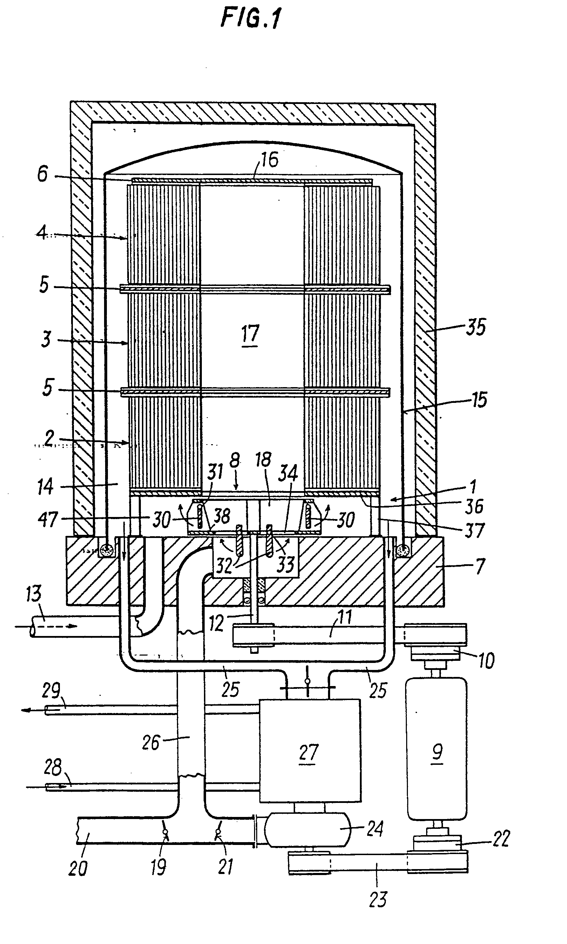

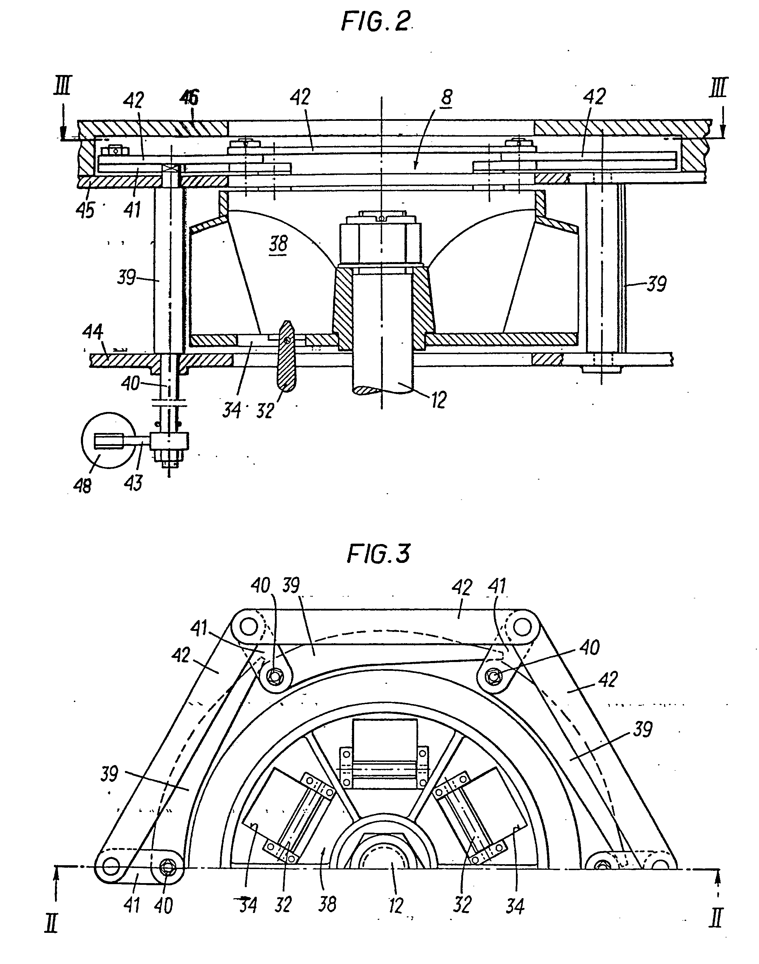

Fig. 1 zeigt einen Axialschnitt durch einen mit Stahlbandbunden beschickten Haubenglühofen mit einer die Schutzgasführung während der Aufwärmephase und während der Kühlphase steuernden, von einem Zentrifugalgebläse gebildeten Vorrichtung. Fig. 2 und 3 zeigen eine abgewandelte Ausführungsform der die Schutzgasführung bewirkenden Vorrichtung, wobei lediglich das Detail im Bereich des Zentrifugalgebläses und der für die Auflage der Bunde dienenden Konsole dargestellt ist. Hiebei zeigt Fig. 2 einen Axialschnitt nach Linie II—II der Fig. 3 und Fig. 3 eine Draufsicht im Schnitt nach Linie III—III der Fig. 2.

Bei der Ausführungsform nach Fig. 1 sind auf einer Konsole 1 drei Bunde 2, 3, 4 unter Zwischenschaltung von ringförmigen Konvektorplatten 5 in üblicher Weise gestapelt. Solche Konvektorplatten sind Platten, welche an ihrer Ober- und an ihrer Unterseite radiale Rippen aufweisen, so daß zwischen den Stirnfläche der Bunde 2, 3 und 4 radial Durchströmöffnungen für das Schutzgas frei bleiben. Die Aufwärmung und Kühlung der Bunde erfolgt daher zumindest teilweise über die Bandkanten. Die Konvektorplatten 5 weisen an ihrer Oberseite und an ihrer Unterseite solche radiale Rippen auf. Die Konsole 1 weist eine Platte 36 auf, welche auf Säulen 37 aufruht, zwischen welchen das Schutzgas durchströmen kann. Diese Platte 36 weist daher nach Art einer Konvektorplatte auf ihrer oberen Seite radiale Rippen auf, auf welchen der Bund 2 aufliegt. Der Raum 47 zwischen der Platte 36 und dem Boden 7 wirkt als Diffusor. Der oberste Bund 4 ist durch eine volle Platte 6 abgedeckt, welche auch den von den Bunden umschlossenen Innenraum 17 abschließt und welche wieder an ihrer Unterseite, mit welcher sie auf dem Bund 4 aufliegt, radiale Rippen nach Art einer Konvektorplatte aufweist.

Die Bunde 2, 3, 4 sind von einer Schutzhaube 15 umschlossen, welche dicht am Boden 7 anliegt. Am Boden 7 des haubenglühofens ist zentrisch das Laufrad 38 eines Zentrifugalgebläses 8 gelagert, welches über einen Motor 9, eine Magnetkupplung 10 und einen Riemen 11 antreibbar ist. Die Welle dieses Gebläses ist mit 12 bezeichnet. Das Gehäuse dieses Zentrifugalgebläses 8 ist von der Bodenplatte 7 und der Platte 36 gebildet.

Während der Aufwärmphase werden Schutzgase über eine Leitung 13 dem Raum 14 zwischen den Bunden 2, 3, 4 und der Schutzhaube 15 zugeführt und durch Konvektion an der erhitzten Schutzhaube 15 erwärmt. Diese heißen Gae strömen über die Konvektorplatte 5, 36 und 6 in den von den Bunden umschlossenen Innenraum 17 und werden von dort durch den Schaufelraum 18 des Umwalzgebläses hindurch über eine Leitung 20 abgesaugt, wobei eine Klappe 19 in dieser Leitung geöffnet und eine Klappe 21 geschlossen ist. Dies wird so lange fortgesetzt, bis der Luftsauerstoff mit Sicherheit aus dem Glühraum entfernt ist.

Während der Aufheiz- und Temperaturhaltephase sind beide Klappen 19, 21 geschlossen und das Umwälzgebläse 8 wird über den Motor 9 und die eingeschaltete Magnetkupplung 10 in Umdrehung versetzt, so daß die heißen Gase in Richtung vom Raum 14 zum Raum 17 umgewälzt werden.

In der darauffolgenden Kühlphase wird das Umwälzgebläse 8 durch Ausschalten der Kupplung 10 stillgesetzt. Über eine Magnetkupplung 22 und einen Riemen 23 wird ein Kühlgebläse 24 angetrieben, welches über Leitungen 25 Gas aus dem Raum 14 ansaugt und über eine Leitung 26 durch den Schaufelraum 18 des stillgesetzten Umwälzgebläses 8 in den von den Bunden 2, 3, 4 umschlossenen Innenraum 17 bläst. Mit dem Gebläse ist ein Gaskühler 27 in Serie geschaltet, welchem Kühlwasser über eine Leitung 28 zugeführt und von welchem das Kühlwasser über eine Leitung 29 abgeführt wird. Hiebei ist die Absperrklappe 21 geöffnet und die Klappe 19 geschlossen.

Das Umwälzgebläse 8 ist, wie bereits erwähnt, als Zentrifugalgebläse ausgebildet, wobei der Schaufelraum des Laufrades 38 mit 18 bezeichnet ist. Eine Gruppe von Klappen 30, welche um Achsen 31 schwenkbar am Laufrad 38 gelagert sind, schließen in der dargestellten Ruhestellung des Laufrades die Laufradkanäle außen ab. In der unteren Wandung des Laufrades 38 sind Durchbrechungen 34 vorgesehen, welche durch Klappen 32, welche um Achsen 33 schwenkbar am Laufrad 38 gelagert sind, abschließbar sind. In der dargestellten Ruhestellung des Laufrades 38 hängen diese Klappen 32 unter der Wirkung der Schwerkraft abwärts und geben diese Durchbrechungen 34 frei. Die Klappen 30 und 32 hängen in der gezeichneten Stellung bei stillgesetztem Umwälzgebläse 8 unter der Wirkung der Schwerkraft nach unten. In dieser Stellung kann somit der Schaufelraum 18 des Gebläses axial durchströmt werden und der Raum 14 zwischen den Bunden und der Schutzhaube 15 ist durch die Klappen 30 von Raum 17 abgeschlossen.

Während der Temperaturhaltephase wird das Umwälzgebläse 8 in Rotation versetzt. Unter der Wirkung der Fliehkraft stellen sich die Klappen 30, 32 ungefähr horizontal, wobei die Durchbrechungen 34 geschlossen und die Laufradkanäle geöffnet werden.

35 ist eine abnehmbare Wärmeisolierhaube,

durch welche Wärmeverluste nach außen verringert werden. Diese Wärmeisolierhaube 35 kann während der Kühlphase aufgesetzt werden, um den Temperaturunterschied zwischen dem Innenraum 17 und dem Außenraum 14 zu vergrößern, da ja die Kühlung der Bunde bevorzugt von innen her erfolgen soll. In der Kühlphase kann aber diese Wärmeisolierhaube auch abgenommen werden, wenn eine schnelle Kühlung gewünscht ist und wenn die gerichtete Strömung der Kühlgase ausreicht, um ein Temperaturgefälle in den Bunden 2, 3, 4 von außen nach innen zu gewährleisten. In der Aufwärmphase und in der Temperaturhaltephase wird anstelle der Wärmeisolierhaube 35 eine Heizhaube aufgesetzt, welche entweder durch Heizgase oder elektrische die Schutzhaube 15 erwärmt, so daß die innerhalb der Schutzhaube befindlichen Schutzgase durch Kontakt an der Schutzhaube 15 erwärmt bzw. heißgehalten werden.

Als Schutzgas kann Stickstoff oder ein anderes neutrales oder reduzierendes Gas verwendet werden. Der Glühprozeß bzw. die Aufwärmphase und Temperaturhaltephase kann 15 bis 35 Stunden währen, wobei zuerst etwa zwei Stunden lang der Innenraum der Schutzhaube 15 mit Schutzgasen gespült wird, um Suerstoff aus diesem Innenraum mit Sicherheit zu entfernen. Die darauffolgende Kühlphase kann etwa fünf Stunden dauern.

Bei der Ausführungsform nach Fig. 2 und 3 weist das Laufrad 38 in gleicher Weise wie bei der Anordnung nach Fig. 1 Klappen 32 auf, welche bei stillgesetztem Laufrad die Axialdurchströmöffnungen 34 freigeben und bei rotierendem Laufrad diese Durchströmöffnungen abschließen. Anstelle der bei der Anordnung nach Fig. 1 vorgesehenen Klappe 30 sind aber nun Klappen 39 vorgesehen, welche um ortsfest gelargerte Achsen bzw. Wellen 40 schwenkbar angeordnet und nach Art der Schaufeln eines Leitapparates ausgebildet sind. Über Hebel 41, welche mit den Achsen bzw. Wellen 40 drehfest verbunden sind, und über Lenker 42 sind alle Klappen 39 zu gleichsinniger Bewegung gekuppelt. An einer der Wellen 40 greift eine von einem hydraulischen Aggregat 48 betätigte Stellvorrichtung 43 an, welche alle Klappen 39 gleichzeitig verstellt. Auf diese Weise wird auch bei Aufbau eines hohen Druckes im Innenraum 17 der Abschluß gesichert. Die Achsen bzw. Wellen 40 sind in einer Bodenplatte 44 und in einer oberen Abdeckplatte 45 gelagert, wobei diese Platten 44 und 45 das Gehäuse des Laufrades 38 bilden. Auf der Platte 46, welche wieder auf ihrer Oberseite mit radialen Rippen nach Art einer Konvektorplatte ausgebildet ist, liegen die Bunde 2, 3 und 4 auf.

**Patentansprüche**

1. Vorrichtung zum Glühbehandeln von kaltgewalzten Bändern aus Metall, insbesondere Stahl, in Form von Bunden (2, 3, 4), in welchen die Bandlagen unmittelbar aneinander anliegen, in welcher die Bunde (2, 3, 4) in einer Aufwärmphase erwärmt und nach einer Temperaturhaltephase in einer Kühlphase abgekühlt werden, mit einer den oder die Bund(e) (2, 3, 4) umschließenden Schutzhaube (15), bei welcher an den durch die Schutzhaube (15) begrenzten Außenraum (14) die Saugseite, und an den von dem oder den Bund(en) umschlossenen Innenraum (17) die Druckseite eines Kühlgebläses (24) angeschlossen ist, mit welchem ein Gaskühler (27) in Serie geschaltet ist, dadurch gekennzeichnet, daß der durch die Schutzhaube (15) begrenzte Außenraum (14) gegenüber dem von dem oder den Bund(en) (2, 3, 4) umschlossenen Innenraum (17) durch das Gehäuse eines von einem Zentrifugalgebläse gebildeten Umwälzgebläses (8) abgeschlossen ist, welches gleichachsig mit dem oder den Bund(en) (2, 3, 4) angeordnet ist, und dessen Laufrad (38) während der Kühlphase stillsetzbar ist, wobei über den Schaufelraum (18) des Laufrades (38) des Umwälzgebläses (8) die Druckseite des Kühlgebläses mit dem von dem oder den Bunden umschlossenen Innenraum (17) in Verbindung setzbar ist.

2. Vorrichtung nach Anspruch 1, dadurch gekennzeichnet, daß das Laufrad (38) des Umwälzgebläses (8) zwischen den Schaufeln axiale Durchtrittsöffnungen (34) aufweist, welche durch Klappen (32) abschließbar sind, welche am Laufrad (38) im Bereich des der Achse näher liegenden Randes der Durchtrittsöffnungen (34) von einer abwärts gerichteten Offenstellung in eine ungefähr horizontale Schließstellung schwenkbar gelagert sind und bei stillstehendem Laufrad (38) unter der Wirkung der Schwerkraft die Durchtrittsöffnungen (34) freigeben und bei rotierendem Laufrad (38) unter der Wirkung der Fliehkraft diese Durchtrittsöffnungen (34) abschließen.

3. Vorrichtung nach Anspruch 1 oder 2, dadurch gekennzeichnet, daß die Austrittsöffnungen der Förderkanäle des Laufrades (38) durch Klappen (30) abschließbar sind, welche im Bereich des oberen Randes der Austrittsöffnungen am Laufrad von einer nach abwärts gerichteten Schließstellung in eine ungefähr horizontal gerichtete Offenstellung schwenkbar gelagert sind und bei stillstehendem Laufrad (38) unter der Wirkung der Schwerkraft die Austrittsöffnungen abschließen und bei rotierendem Laufrad unter Wirkung der Fliehkraft diese Austrittsöffnungen freigeben.

4. Vorrichtung nach Anspruch 1 oder 2, dadurch gekennzeichnet, daß das Laufrad (38) des Umwälzgebläses (8) von ortsfest gelagerten schwenkbaren Klappen (39) umgeben ist, welche von außen betätigbar sind und in ihrer geschlossenen Stellung den durch die Schutzhaube (15) begrenzten Außenraum (14) von dem durch den oder die Bund(e) (2, 3, 4) umschlossenen Innenraum (17) abschließen und in ihrer geöffneten Stellung diese Räume verbinden.

5. Vorrichtung nach Anspruch 4, dadurch gekennzeichnet, daß die Klappen (39) von nach Art eines Leitapparates um achsparallel zum Gebläse angeordnete Achsen (40) schwenkbar gelagerten Schaufeln gebildet sind, welche zu einer gemeinsamen Verschwenkbewegung gekuppelt sind und in der geschlossenen Stellung aneinander anliegen.

6. Vorrichtung nach einem der Ansprüche 1 bis 5, dadurch gekennzeichnet, daß das Gehäuse des Umwälzgebläses (8) vom Boden des den oder die Bund(e) aufnehmenden Raumes (14) und von einer einen Teil der Konsole für die Auflagerung der Bunde bildenden Platte (36) gebildet ist.

7. Vorrichtung nach einem der Ansprüche 1 bis 6, dadurch gekennzeichnet, daß die Bunde (2, 3, 4) in an sich bekannter Weise unter Zwischenschaltung von ringförmigen Konvektorplatten (5) gestapelt sind, und daß die oberste Konvektorplatte (6) als die Bunde (2, 3, 4) und den von den Bunden umschlossenen Innenraum (17) derselben abdeckende volle Platte ausgebildet ist.

8. Vorrichtung nach einem der Ansprüche 1 bis 7, dadurch gekennzeichnet, daß eine die Schutzhaube (15) umgebende, abnehmbare Wärmeisolierhaube (35) vorgesehen ist.

**Revendications**

1. Dispositif pour le recuit de bandes de métal, notamment d'acier, laminées à froid, présentées sous la forme de bobines (2, 3 4) dans lesquelles les couches de la bande s'appliquent directement les unes sur les autres, dispositif dans lequel les bobines (2, 3, 4) sont chauffées dans une phase de chauffage et, après une phase de maintien de la température, refroidies dans une phase de refroidissement, ce dispositif comprenant une cloche de protection (15) qui entoure la bobine ou les bobines (2, 3, 4), le côté d'aspiration d'un ventilateur de refroidissement (24) en série avec lequel est connecté un refroidisseur de gaz (27) étant raccordé au volume extérieur (14) limité par la cloche de protection (15) et le côté de pression de ce ventilateur étant raccordé au volume intérieur (17) entouré par la bobine ou les bobines, ce dispositif étant caractérisé en ce que le volume extérieur (14) limité par la cloche de protection (15) est isolé du volume intérieur (17) entouré par la bobine ou les bobines (2, 3, 4) par le carter d'un ventilateur de circulation (8) constitué par un ventilateur centrifuge, qui est agencé coaxialement à la bobine ou aux bobines (2, 3, 4) et dont la roue (38) peut être arrêtée pendant la phase de refroidissement, le côté de pression du ventilateur de refroidissement pouvant alors être mis en communication avec le volume intérieur (17) entouré par la bobine ou les bobines par l'intermédiaire du volume d'aubage (18) de la roue (38) du ventilateur de circulation (8).

2. Dispositif suivant la revendication 1, caractérisé en ce que la roue (38) du ventilateur de circulation (8) présente entre les aubes des ouvertures de traversée axiales (34) pouvant être obturées par des volets (32) qui sont montés oscillants sur la roue (38) dans la région du bord des ouvertures de traversée (34) qui est le plus proche de l'axe, de manière à pouvoir osciller d'une position d'ouverture dirigée vers le bas à une position de fermeture à peu près horizontale et qui, lorsque la roue (38) est à l'arrêt, dégagent les ouvertures de traversée (34) sous l'action de la gravité et, lorsque la roue (38) est en rotation, obturent ces ouvertures de traversée (34) sous l'action de la force centrifuge.

3. Dispositif suivant la revendication 1 ou 2, caractérisé en ce que les ouvertures de sortie des canaux de refoulement de la roue (38) peuvent être obturées par des colets (30) qui sont montés oscillants sur la roue dans la région du bord supérieur des ouvertures de sortie, de manière à pouvoir osciller d'une position de fermeture dirigée vers le bas à une position d'ouverture dirigée à peu près horizontalement et qui, lorsque la roue (38) est à l'arrêt, obturent les ouvertures de sortie sous l'action de la gravité et, lorsque la roue est en rotation, dégagent ces ouvertures de sortie sous l'action de la force centrifuge.

4. Dispositif suivant la revendication 1 ou 2, caractérisé en ce que la roue (38) du ventilateur de circulation (8) est entourée de volets (39) oscillants qui sont montés rotatifs en des points fixes, qui peuvent être actionnés de l'extérieur et qui, dans leur position fermée, isolent le volume extérieur (14) limité par la cloche de protection (15) du volume intérieur (17) entouré par la bobine ou les bobines (2, 3, 4) et, dans leur position ouverte, mettent ces volumes en communication.

5. Dispositif suivant la revendication 4, caractérisé en ce que les volets (39) sont constitués par des aubes montées oscillantes autour d'axes (40) disposés parallèlement à l'axe du ventilateur, à la façon d'un distributeur, et qui sont couplées pour décrire un mouvement de pivotement commun et s'appliquent les unes sur les autres dans la position fermée.

6. Dispositif suivant l'une quelconque des revendications 1 à 5, caractérisé en ce que le carter du ventilateur de circulation (8) est formé par le fond du volume (14) qui reçoit la bobine ou les bobines et par une plaque (36) qui constitue une partie de la console pour le chargement des bobines.

7. Dispositif suivant l'une quelconque des revendications 1 à 6, caractérisé en ce que les bobines (2, 3, 4) sont empilées d'une façon connue en soi avec interposition de plaques convectrices annulaires (5) et en ce que la plaque convectrice extrême supérieure (6) est constituée sous la forme d'une plaque pleine qui recouvre les bobines (2, 3 4) et ferme le volume intérieur (17) entouré par ces bobines.

8. Dispositif suivant l'une quelconque des revendications 1 à 7, caractérisé en ce qu'il est prévu une cloche isolante de la chaleur et amovible (35) qui entoure la cloche de protection (15).

## Claims

1. Device for annealing cold rolled tapes of metal, in particular of steel, having the shape of coils (2, 3, 4) within which the windings are directly contacting one another, the coils (2, 3, 4) being, within this device, heated during a heating stage and, after a thermal retardation for maintaining the temperature, cooled during a cooling stage, said device comprising a protective hood (15) enclosing the coil or coils (2, 3, 4) and said device having connected to the exterior space (14) defined by the protective hood (15) connected the suction side of a cooling blower (24) and having connected to the interior space (27) enclosed by the coil or coils the pressure side of said cooling blower (24), a gas cooler (27) being provided in series connection with the cooling blower, characterized in that, the exterior space (14) delimited by the protective hood (15) is closed with respect to the interior space (17) enclosed by the coil or coils (2, 3, 4) by the housing of a circulating blower (8) formed of a centrifugal blower, said circulating blower being coaxially arranged relative to the coil or coils (2, 3, 4) and having its impeller (38) arrestable during the cooling stage and the pressure side of the cooling blower being connectable with the interior space (17) enclosed by the coil or coils via the impeller space (18) of the impeller (38) of the circulating blower (8).

2. Device as claimed in claim 1, characterized in that the impeller (38) of the circulating blower (8) has between the impeller blades axial through-passages (34) closeable by lids (32) being pivotally supported on the impeller (38) at that area of the edge of the through-passages (34) located more adjacent to the axis for being moved from a downwardly directed open position into an approximately horizontal closed position, said lids (32) giving free the through-passages (34) under the influence of gravity with non-rotating impeller (38) and closing said through-passages (34) under the action of the centrifugal force with rotating impeller (38).

3. Device as claimed in claim 1 or 2, characterized in that, the exit openings of the supply channels of the impeller (38) are closeable by lids (30) being pivotally supported on the impeller at the area of the upper margin of the exit openings for being moved from a downwardly directed closed position into an approximately horizontally directed open position, said lids (30) closing the exit openings under the action of gravity with non-rotating impeller (38) and giving free said exit openings under the action of the centrifugal force with rotating impeller.

4. Device as claimed in claim 1 or 2, characterized in that the impeller (38) of the circulating blower (8) is surrounded by stationarily pivotally supported lids (39) being externally operable and separating in their closed position the exterior space (14) delimited by the protective hood (15) from the interior space (17) by the coil or coils (2, 3, 4) and connecting these spaces in their open position.

5. Device as claimed in claim 4, characterized in that the lids (39) are formed of plates arranged for pivotal movement around axes (40) extending in parallel relation to the blower axis in the manner of a diffuser, said plates being coupled for common pivotal movement and contacting one another in the closed position.

6. Device as claimed in any of claims 1 to 5, characterized in that the housing of the circulating blower (8) is formed of the bottom of the space (14) accommodating the coil or coils and of a plate (36) forming part of the bracket for supporting the coils.

7. Device as claimed in any of claims 1 to 6, characterized in that the coils (2, 3, 4) are stacked in a manner known per se with interposition of annular convection plates (5) and in that the topmost convection plate (6) is designed as a full plate covering the interior space (17) enclosed by the coils.

8. Device as claimed in any of claims 1 to 7, characterized in that a heat insulating hood (35) is provided which surrounds the protective hood (15).

## FIG.1

FIG.1

## FIG. 2

## FIG. 3